Europäisches Patentamt

European Patent Office

Office européen des brevets

(11) Veröffentlichungsnummer : **0 434 677 B1**

(12) **EUROPÄISCHE PATENTSCHRIFT**

(45) Veröffentlichungstag der Patentschrift :
**10.03.93 Patentblatt 93/10**

(21) Anmeldenummer : **88908158.4**

(22) Anmeldetag : **05.10.88**

(86) Internationale Anmeldenummer :
**PCT/DE88/00613**

(87) Internationale Veröffentlichungsnummer :
**WO 89/11992 14.12.89 Gazette 89/29**

(51) Int. Cl.⁵ : **B62D 7/14,** B62D 6/02

(54) **PROZESSRECHNERGESTEUERTE AKTIVE HINTERACHSENKINEMATIK EINES KFZ.**

(30) Priorität : **10.06.88 DE 3819849**

(43) Veröffentlichungstag der Anmeldung :
**03.07.91 Patentblatt 91/27**

(45) Bekanntmachung des Hinweises auf die
Patenterteilung :
**10.03.93 Patentblatt 93/10**

(84) Benannte Vertragsstaaten :
**DE FR GB IT**

(56) Entgegenhaltungen :
**DE-A- 3 525 543**
**DE-A- 3 624 457**

(73) Patentinhaber : **SIEMENS**
**AKTIENGESELLSCHAFT**
**Wittelsbacherplatz 2**
**W-8000 München 2 (DE)**

(72) Erfinder : **RAUNER, Hans**
**Evermod-Groll-Weg 7**
**W-8415 Nittenau (DE)**

Anmerkung : Innerhalb von neun Monaten nach der Bekanntmachung des Hinweises auf die Erteilung des europäischen Patents kann jedermann beim Europäischen Patentamt gegen das erteilte europä- ische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patent- übereinkommen).

## Beschreibung

Die Erfindung betrifft eine durch DE-OS 36 24 457 bekannte aktive Hinterachsenkinematik für ein auch an den Hinterrädern gelenktes Kraftfahrzeug gemäß dem Oberbegriff von Anspruch 1.

Bei der bekannten Hinterachskinematik wird zur Berechnung des Hinterachslenkwinkels eine Differentialgleichung mittels Prozeßrechner gelöst. Solche Differentialgleichungen sind mittels digitaler, also nichtanaloger Methoden üblicherweise durch iterative Verfahren zu lösen. Dabei ergibt sich das Problem, daß die Lösung erst nach einer - zu Beginn der Berechnung noch nicht bekannten - Anzahl von Iterationsschritten hinreichend genau gelöst wird. Dies bedeutet, daß in Situationen, in denen schnell reagiert werden muß, der Rechner nicht mehr rechtzeitig ein Resultat findet bzw. mit zu ungenauen Lösungen gerechnet werden muß, je nachdem, wieviele Iterationsschritte durchgeführt werden konnten.

Bei einem Automobil kann dies gerade in Gefahrensituationen, wenn abrupt gelenkt wird, zu Problemen führen. Auch fordert die iterative Lösung einer Differentialgleichung einen relativ großen Speicherbedarf für den Prozeßrechner.

Die Aufgabe der Erfindung ist es,
- eine präzise Lösung trotz sehr kurzer Rechenzeit zu ermöglichen, sowie
- den Rechenaufwand im Prozeßrechner und als Folge davon auch den Speicherbedarf dieses Prozeßrechners reduzieren zu können.
Diese Aufgabe wird durch die im Hauptanspruch angegebenen Maßnahmen gelöst.

Soweit ein Prozeßrechner bisher hierbei nach einem iterativen Verfahren arbeitet, kann er, wie später gezeigt wird, mittels der z-Transformation gemäß der Erfindung so umprogrammiert werden, daß er danach ausschließlich nach Differenzengleichungen arbeitet, die den Differentialgleichungen entsprechen.

Die ursprünglich gegebene Differentialgleichung darf im Prinzip trotzdem kompliziert sein, z.B. - wie oft bei Differentialgleichungen üblich - auch Glieder höherer Ordnung und viele Parameter enthalten, z.B. um den Steuerungskomfort oder die Zuverlässigkeit in Extremlagen weiter zu verbessern. Trotzdem ist mit der Erfindung das Ergebnis sehr rasch und präzis zu ermitteln. So kann z.B. auch der jeweilige Hinterachs- bzw. Hinterradlenkwinkel mitberücksichtigt werden. Ebenso kann eine komplizierte Abhängigkeit - z.B. Geschwindigkeitsabhängigkeit - des im Oberbegriff des Patentanspruches 1 genannten Faktors und der beiden dort genannten "Konstanten" mitberücksichtigt werden.

Die neue Arbeitsweise des Prozeßrechners wird besser verständlich, wenn man auf die mathematischen Grundlagen eingeht:

Der Prozeßrechner hat z.B. die Aufgabe, aufgrund der Lenkwinkelstellung, der Lenkwinkelgeschwindigkeit und der Fahrzeuggeschwindigkeit das Stellglied für die Hinterachse nach folgendem Algorithmus, also gemäß einer Differentialgleichung, anzusteuern:

$$TI . \dot{\delta}_h(t) + \delta_h(t) = PHA . (\delta_v(t) + TD . \dot{\delta}_v(t))$$

mit $\delta_h$ = Hinterachslenkwinkel

und $\delta_v$ = Vorderachslenkwinkel, wobei im folgenden "$\delta$" als "delta", "$\dot{\delta}$" als "ddelta" (und "$\Delta$" als "Delta") bezeichnet wird.

Hierbei können der Mitlenkfaktor PHA, die Vorhaltezeitkonstante TD und die Verzögerungszeitkonstante TI sogar geschwindigkeitsabhängige Parameter und als solche z.B. durch Kennlinien - bzw. durch entsprechende, in einem Speicher gespeicherte Tabellen, gespeichert als bestimmte kennzeichnende einzelne Werte, zwischen denen bei Bedarf auch interpoliert werden kann - dargestellt sein. Der erfindungsgemäße Prozeßrechner kann übrigens so ausgelegt werden, daß sogar eine Veränderung der Kennlinien durch nachträgliche Änderung der gespeicherten Werte dieser Tabellen ($Tab_1$, $Tab_2$, $Tab_3$) möglich ist. Für eine Tabelle PHA über der Geschwindigkeit sind z.B. 100 Werte, für die Tabelle TD und TI über der Geschwindigkeit sind z.B. je 10 Werte abgespeichert. Die Schrittweite zwischen den Werten beträgt bei der PHA-Tabelle z.B. 2,5 km/h, bei den Tabellen TD und TI z.B. jeweils 25 km/h. Innerhalb der Schrittweite gilt z.B. der untere Wert, falls nicht interpoliert wird.

Die Berechnung kann an sich z.B. nach der folgenden Formel erfolgen:

```
delta_h = Delta t . (-1/T_1 . delta_h(t-Delta t) +
   + 1/T_1 . PHA (delta_v(t) + ddelta_v(t) . TD)) +
   + delta_h(t-Delta t),
```

was - aber! - ein iteratives Näherungsverfahren darstellt.

Die Erfindung gestattet zu vermeiden, die obige Differentialgleichung umständlich mittels eines iterativen Näherungsverfahrens, z.B. gemäß dem angegebenen, mit hohem Zeitaufwand lösen zu müssen, um mittels der gefundenen Lösung den Winkel der Hinterachse bzw. der Hinterräder zu steuern. Überdies ermittelt die Erfindung rasch präzise Lösungen statt Näherungslösungen, weswegen die Erfindung rasch und präzise die Hinterräder lenkt.

Die Erfindung ermittelt die Lösung nicht direkt aus der Differentialgleichung nach einem iterativen Näherungsverfahren. Die Differentialgleichung ist vielmehr, da es sich bei der betreffenden Hinterachskinematik nicht um ein zeitkontinuierliches System, sondern um ein abgetastetes, zeitdiskretes System handelt, zunächst in eine Differenzengleichung umgewandelt. Dazu errechnet man zunächst aus der Differentialgleichung mittels einer z-Transformation die zugehörige z-Übertragungsfunktion eines gleichwirkenden Filters, wobei diese z-Übertragungsfunktion eine oder mehrere charakteristische Polstellen und Nullstellen enthält. Daraus ermittelt man jene Differenzengleichung, die der Prozessor erfindungsgemäß abzuarbeiten hat, - mit der also erfindungsgemäß der Prozessor zu programmieren ist. Diese Differenzengleichung entspricht also (jedenfalls bei Einhaltung des Abtasttheorems) der ursprünglichen Differentialgleichung und beschreibt gleichsam ein digitales Filter, das die Lösung der Differentialgleichung liefert, obwohl für die Berechnung eine Differenzengleichung benutzt wird. Dieses Filter besitzt also eine Charakteristik, welche die exakte Lösung der Differentialgleichung für das abgetastete System liefert.

Hierzu ein konkretes Beispiel: Im Fall der oben betrachteten Hinterachsenkinematik handelt es sich sozusagen um ein rekursives Filter erster Ordnung, das in kanonischer Struktur, d.h. mit einer minimaler Anzahl von Speicherelementen, realisiert werden kann. Die nötige Filtercharakteristik, bzw. der vom Prozeßrechner abzuarbeitende Algorithmus, ergibt sich aus folgender Herleitung der erfindungsgemäßen, schnellen Variante zur Lösung der Differentialgleichung für den Fall abgetasteter Systeme (die Abtastperiode T beträgt hierbei z.B. 10 ms; vgl. z.B. auch die Fachbücher

- Oppenheim/Schafer:     Digital Signal Processing. Englewood Cliffs 1975, sowie
- Rabiner/Gold:     Theory and Application of Digital Signal Processing. Englewood Cliffs 1975):

Errechnet wird der Ausgangszustand eines digitalen Filters, das durch die aus der Differentialgleichung abgeleitete Differenzengleichung beschrieben wird.

Die Differentialgleichung kann zunächst in die allgemeine Form

$$A \cdot y'(t) + y(t) = B [x(t) + C x'(t)]$$

mit

$$A: = TI \qquad y: = delta_h \text{ (Hinterachse)}$$
$$B: = PHA \qquad x: = delta_v \text{ (Vorderachse)}$$
$$C: = TD$$

umgeschrieben werden. Die Zeitdiskretisierung ergibt eine Differenzengleichung mit
$t = k \cdot T$ und $T$ = Abtastintervall:

$$A \left( \frac{y(k) - y(k-I)}{T} \right) + y(k) = B [x(k) + C \left( \frac{x(k) - x(k-I)}{T} \right)]$$

bzw.

$$\frac{A}{T} [y(k) - y(k-I)] + y(k) = Bx(k) + \frac{BC}{T} [x(k) - x(k-I)]$$

Nach einer z-Transformation erhält man

$$\frac{A}{T} [Y(z) - Y(z)z^{-I}] + Y(z) = B \cdot X(z) + \frac{BC}{T} [X(z) - X(z)z^{-I}]$$

Es ergibt sich dann folgende z-Übertragungsfunktion:

$$\frac{Y(z)}{X(z)} = \frac{B [I + \frac{C}{T}(I - z^{-I})]}{[I + \frac{A}{T}(I - z^{-I})]}$$

und hierbei speziell:

$$\frac{Delta_h(z)}{Delta_v(z)} = \frac{PHA \cdot [I + \frac{TD}{T}(I - z^{-I})]}{[I + \frac{TI}{T}(I - z^{-I})]}$$

mit der Nullstelle:

$$z_0 = 1 / (1 + T/TD)$$

und mit der Polstelle:

$$z_{00} = 1 / (1 + T/TI)$$

Es handelt sich also um ein stabiles System, da TI > 0 (Pol liegt innerhalb des Einheitskreises).

Die Lösung der Differenzengleichung mittels digitalem Filter entspricht also

$$y(k) = \frac{A}{A + T} y(k - 1) + \frac{B(C + T)}{A + T} x(k) - \frac{BC}{A + T} x(k - 1)$$

speziell:

$$Delta_h(k) = \frac{TI}{TI + T} Delta_h(k - 1) + \frac{PHA(TD + T)}{TI + T} Delta_v(k) - \frac{PHA \cdot TD}{TI + T} Delta_v(k - 1)$$

Mit PHA, TI, TD als Funktionen von v, also von der KFZ-Geschwindigkeit, ergibt das die folgende Differenzengleichung :

$$Delta_h(k) = Tab_1(v) \cdot Delta_h(k - 1) + Tab_2(v) \cdot Delta_v(k) + + Tab_3(v) \cdot Delta_v(k - 1)$$

mit

$$Tab_1(v) = \frac{TI(v)}{TI(v) + T}$$

$$Tab_2(v) = PHA(v) \frac{T + TD(v)}{TI(v) + T}$$

$$Tab_3(v) = - PHA(v) \frac{TD(v)}{TI(v) + T}$$

Zur Lösung dieser aus der Differentialgleichung abgeleiteten Differenzengleichung sind daher nun - statt der langwierigen, nur ungenaue Resultate liefernden iterativen Berechnungsmethode

- nur noch 3 Multiplikationen sowie 2 Additionen pro Zyklus/Abtastperiode nötig. Dieser Betrieb des Prozeßrechners bietet daher folgende Vorteile:
- exakte Lösungen statt Näherungen
- weniger Rechenoperationen (keine Division!)
- weniger Speicheroperationen
- Ausnutzung der bekannten Eigenschaften digitaler Filter z.B. hinsichtlich Stabilität, Numerik usw.
- erleichterte Realisierung in Fixed-Point-Arithmetik, dadurch weitere Reduktion von Rechen- und Speicheroperationen, sowie
- besonders geringer Speicherbedarf für Code und Daten bzw. Tabellen; z.B. ist häufig eine Halbierung des Speicherbedarfs für die Tabellen $Tab_1(v)$, $Tab_2(v)$ und $Tab_3(v)$ zulässig bzw. zulaßbar, ohne den Betrieb der Hinterachskinematik - im Vergleich zu deren Betrieb mittels der Lösung der Differentialgleichung durch iterative Näherung - zu verschlechtern.

Dieses Herleitungsbeispiel zeigt außerdem, daß der Prozeßrechner auch als ein digitales Filter bezeichnet werden kann, das gemäß der Differenzengleichung dimensioniert ist, wobei die genannten Vorteile erhalten bleiben.

**Patentansprüche**

1. Aktive Hinterachsenkinematik für ein auch an den Hinterrädern gelenktes Kraftfahrzeug, bei dem der bzw. die Hinterradlenkwinkel von einem elektronisch angesteuerten Stellorgan gemäß Sollwerten für den bzw. die Hinterradlenkwinkel bzw. davon ableitbaren Sollwerten eingestellt werden, wobei diese Sollwerte bzw. die Hinterradlenkwinkel ermittelt werden zumindest aus

- Abtastwerten für die jeweiligen Vorderachslenkwinkel und/ oder davon ableitbaren Werten,
- einer - evtl. geschwindigkeitsabhängigen - Vorhaltezeitkonstante,
- einer - evtl. geschwindigkeitsabhängigen - Verzögerungszeitkonstante und
- einem - evtl. geschwindigkeitsabhängigen - Mitlenkfaktor,

**dadurch gekennzeichnet,**

daß zur Ermittlung der Sollwerte für den bzw. die Hinterachslenkwinkel ein digitales Filter vorgesehen ist, das gemäß einer Differenzengleichung dimensioniert ist, wobei die Differenzengleichung ihrerseits einer Differentialgleichung für die Lenkkinematik unter Einhaltung des Abtasttheorems entspricht.

2. Aktive Hinterachsenkinematik nach Anspruch 1,

**dadurch gekennzeichnet,**

daß das digitale Filter durch einen entsprechend programmierten Prozeßrechner realisiert ist.

3. Hinterachskinematik nach Patentanspruch 1 oder 2,
**dadurch gekennzeichnet,** daß
das digitale Filter bzw. der Prozeßrechner auch den jeweiligen Hinterachslenkwinkel berücksichtigt.

4. Hinterachskinematik nach Patentanspruch 1 bis 3,
**dadurch gekennzeichnet,**
in nichtlinearer Weise geschwindigkeitsabhängige Einzelwerte für die Vorhaltezeitkonstante, für die Verzögerungszeitkonstante und/oder für den Mitlenkfaktor als Tabelle in einem Speicher gespeichert sind.

## Claims

1. Active rear axle kinematics for a motor vehicle also steered at the rear wheels, in which the rear wheel steering angle or angles are set by an electronically controlled actuator in accordance with desired values for the rear wheel steering angle or angles or desired values which can be derived therefrom, these desired values or the rear wheel steering angles being determined at least from
   - scanned values for the respective front axle steering angles and/or values which can be derived therefrom,
   - a - possibly speed-dependent - derivative action time constant,
   - a - possibly speed-dependent - delay time constant, and
   - a - possibly speed-dependent - co-steering factor,
   characterized in that there is provided for the purpose of determining the desired values for the rear axle steering angle or angles a digital filter which is dimensioned in accordance with a difference equation, the difference equation corresponding, for its part, to a differential equation for the steering kinematics while satisfying the scanning theorem.

2. Active rear axle kinematics according to Claim 1, characterized in that the digital filter is realised by an appropriately programmed process computer.

3. Rear axle kinematics according to Patent Claim 1 or 2, characterized in that the digital filter or the process computer also considers the respective rear axle steering angle.

4. Rear axle kinematics according to Patent Claims 1 to 3, characterized in that time-dependent individual values for the derivative action time constant, for the delay time constant and/or for the co-steering factor are stored in a nonlinear fashion as a table in a memory.

## Revendications

1. Cinématique active d'essieu arrière pour un véhicule automobile également articulé sur les roues arrière, dans lequel le ou les angles de braquage des roues arrière peuvent être réglés par un organe de réglage à commande électronique conformément à des valeurs de consigne pour le ou les angles de braquage des roues arrière ou à des valeurs de consigne pouvant être tirées de ces angles, ces valeurs de consigne ou les angles de braquage des roues arrière étant déterminés au moins à partir
   - de valeurs d'échantillonnage pour les angles de braquage respectifs de l'essieu avant et/ou de valeurs tirées de ces angles,
   - d'une constante de temps d'avance - qui dépend éventuellement de la vitesse,
   - d'une constante de temps de décélération - qui dépend éventuellement de la vitesse, et
   - d'un facteur de braquage conjoint - qui dépend éventuellement de la vitesse,
   caractérisée par le fait
   que pour la détermination des valeurs de consigne pour le ou les angles de braquage des roues arrière, il est prévu un filtre numérique, qui est dimensionné conformément à une équation différentielle, qui pour sa part correspond à une équation différentielle pour la cinématique de braquage respectant le théorème d'échantillonnage.

2. Cinématique active pour l'essieu arrière suivant la revendication 1, caractérisée par le fait que le filtre numérique est constitué par un calculateur de processus programmé de façon correspondante.

3. Cinématique active pour l'essieu arrière suivant la revendication 1 ou 2, caractérisée par le fait que le filtre numérique ou le calculateur de processus tient compte également des angles respectifs de braquage de l'essieu arrière.

4. Cinématique active pour l'essieu arrière suivant les revendications 1 à 3, caractérisée par le fait que des valeurs individuelles, qui dépendent d'une manière non-linéaire de la vitesse, pour la constante de temps d'avance, pour la constante de temps de décélération et/ou pour le facteur de braquage conjoint, sont mémorisées sous la forme d'un tableau dans une mémoire.